# EUROPÄISCHE PATENTANMELDUNG

(11) **EP 1 024 588 A1**
(43) Veröffentlichungstag der Anmeldung: **02.08.2000**
(21) Anmeldenummer: 99810058.0
(22) Anmeldetag: 26.01.1999
(51) Int. Cl.: H02K 41/035

(54) **Elektromagnetische Antriebsvorrichtung**

(71) Anmelder: ESEC Management SA, 6330 Cham (CH); Esec SA, 6330 Cham (CH)
(72) Erfinder: Lendi, Dominic, 6314 Unterägeri (CH)

(57) **Zusammenfassung**

Eine elektromagnetische Antriebsvorrichtung zum Antrieb eines Arbeitsorganes (6) besteht aus einem Stator (2) und einer mit dem Stator (2) berührungsfrei zusammenwirkenden Spule (3). Der Stator (2) weist einen senkrechten Steg (7) und drei im Abstand zueinander angeordnete, horizontal verlaufende Stege (8, 9, 10) auf. Der mittlere Steg (9) des Stators (2) weist einen gegen das Arbeitsorgan (6) hin offenen Spalt (14) oder einen Schlitz (19) auf. Somit kann der Spulenkörper (4) und/oder das die Spule (3) und das Arbeitsorgan (6) verbindende Verbindungselement durch einen Steg (15) verstärkt werden.

## Beschreibung

Die Erfindung betrifft eine elektromagnetische Antriebsvorrichtung der im Oberbegriff des Anspruchs 1 genannten Art.

Solche Antriebsvorrichtungen werden vorteilhaft in Wire Bondern zur horizontalen Bewegung des Bondkopfes verwendet.

Eine elektromagnetische Antriebsvorrichtung der im Oberbegriff des Anspruchs 1 genannten Art ist aus der schweizerischen Patentschrift CH 678 907 bekannt. Die Antriebsvorrichtung weist einen ortsfest angeordneten, E-förmigen Stator auf, der mit einer Spule berührungsfrei zusammenwirkt. Die Windungen der Spule sind so ausgebildet, dass die Spule sowohl längs einer Antriebsrichtung als auch orthogonal zur Antriebsrichtung beweglich ist. Die Spule ist über ein Trägerelement mit einem Arbeitsorgan, beispielsweise dem Bondkopf eines Wire Bonders, starr verbunden. Das Trägerelement muss eine hohe Verwindungssteifigkeit aufweisen. Will man die zu beschleunigende Masse möglichst tief halten, dann ist die Verwendung leichter, aber teurer Materialien erforderlich.

Der Erfindung liegt die Aufgabe zugrunde, eine aus einem Stator und einer Spule bestehende elektromagnetische Antriebsvorrichtung zum Antrieb eines Arbeitsorganes vorzuschlagen, die eine einfache Verbindung der Spule mit dem Arbeitsorgan ermöglicht.

Die genannte Aufgabe wird erfindungsgemäss gelöst durch die Merkmale des Anspruchs 1.

Nachfolgend werden Ausführungsbeispiele der Erfindung anhand der Zeichnung näher erläutert.

Es zeigen:
- Fig. 1: den Stator einer elektromagnetischen Antriebsvorrichtung im Querschnitt, und
- Fig. 2 - 4: weitere Ausführungsbeispiele des Stators.

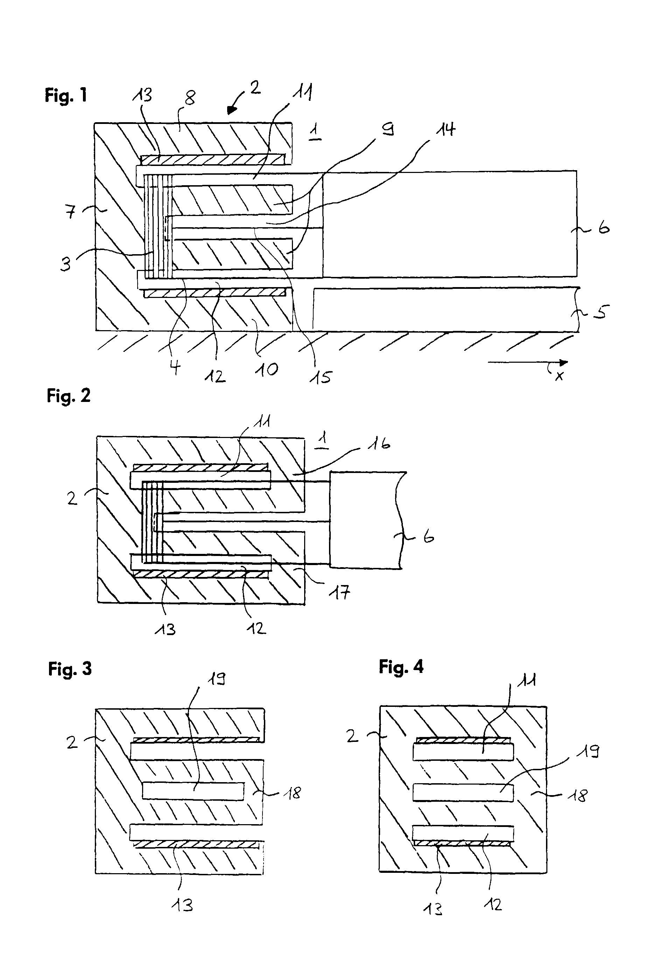

Die Fig. 1 zeigt im Querschnitt in nicht massstabsgetreuer Darstellung eine elektromagnetische Antriebsvorrichtung 1. Die Antriebsvorrichtung 1 besteht aus einem Stator 2 und einer mit dem Stator 2 berührungsfrei zusammenwirkenden Spule 3. Die Spule 3 weist einen Spulenkörper 4 auf, der mit einem auf einer horizontal angeordneten Gleitplatte 5 gleitenden Arbeitsorgan 6 starr verbunden ist. Das Arbeitsorgan 6 trägt beispielsweise den nicht dargestellten Bondkopf eines Wire Bonders. Das Arbeitsorgan 6 ist vorzugsweise über ein mit Vakuum vorgespanntes Luftlager auf der Gleitplatte 5 annähernd reibungsfrei gelagert. Anstelle der Gleitplatte 5 und des Arbeitsorgans 6 kann aber auch ein in zwei orthogonalen Richtungen x und y beweglicher Tisch vorgesehen sein, wobei dann die obere Platte des Tisches fest mit dem Spulenkörper 4 verbunden ist. Die Antriebsvorrichtung 1 dient dem Antrieb des Arbeitsorgans 6 in x-Richtung. Die Spule 3 ist gemäss der Lehre des schweizerischen Patentes CH 678 907 so ausgebildet, dass sie auch in der zur x-Richtung orthogonalen horizontalen y-Richtung verschiebbar ist.

Der Stator 2 ist im Profilquerschnitt im wesentlichen E-förmig ausgebildet. Der Stator 2 weist einen senkrechten Steg 7 und drei im Abstand zueinander angeordnete, horizontal verlaufende Stege 8 - 10 auf. Zwischen dem oberen Steg 8 und dem mittleren Steg 9 ist ein erster Luftspalt 11 gebildet und zwischen dem mittleren Steg 9 und dem unteren Steg 8 ist ein zweiter Luftspalt 12 gebildet. Die Windungen der Spule 3 verlaufen durch diese beiden Luftspalte 11 und 12. An den den Luftspalten 11, 12 zugeordneten Seiten der Stege 8 und 10 befinden sich Magnete 13, die mit der Spule 3 in bekannter Weise zusammenwirken.

Erfindungsgemäss weist der mittlere Steg 9 des Stators 2 einen gegen das Arbeitsorgan 6 hin offenen Spalt 14 auf. Im Spalt 14 befindet sich ein mit dem Spulenkörper 4 verbundener Steg 15. Der Steg 15 verbindet die beiden senkrecht verlaufenden Seitenwände des Spulenkörpers 4 und vergrössert die Steifigkeit des Spulenkörpers 4. Der Steg 15 ist auch mit der dem Arbeitsorgan 6 zugewandten Wand des Spulenkörpers 4 verbunden. In der Zeichnung ist der Steg 15 nur schematisch dargestellt. In der einfachsten Ausführung ist der Steg 15 eine Platte. Bevorzugt ist der Steg 15 ein profilierter dreidimensionaler Körper, der in seiner Form so gestaltet ist, dass er bei möglichst geringem Gewicht möglichst stabil ist.

Der Spalt 14 ermöglicht es, die mechanische Stabilität des Verbindungselementes, das die Spule 3 mit dem Arbeitsorgan 6 verbindet, durch den zusätzlichen Steg 15 markant zu vergrössern oder aber, bei vorgegebener Stabilität, das Gewicht des Verbindungselementes deutlich zu reduzieren. Insbesondere kann dadurch der Spulenkörper 4 im Bereich der Windungen der Spule 3 verstärkt und dadurch die Steifigkeit der Spule 3 ohne grosse Gewichtszunahme vergrössert werden. Der Steg 15 kann weiter als Kühlkörper, beispielsweise mit Kühlrippen, ausgebildet sein, damit die beim Antrieb in der Spule 3 entstehende Wärme besser an die umgebende Luft abgeführt werden kann.

Die Fig. 2 zeigt eine als Voice Coil Motor ausgebildete Antriebsvorrichtung 1 mit einem Stator 2, bei dem die beiden Luftspalte 11, 12 auf der dem Arbeitsorgan 6 zugewandten Seite durch weitere Stege 16 und 17 geschlossen sind.

Die Fig. 3 und 4 zeigen Ausführungsbeispiele, bei denen der Spalt 14 gegen das Arbeitsorgan 6 hin nicht offen, sondern durch einen Steg 18 abgeschlossen ist: aus dem Spalt 14 wird ein Schlitz 19. Der Steg 18 erhöht die mechanische Stabilität des Stators 2 und unterbindet dessen Neigung zu Schwingungen, er verhindert aber eine direkte Verbindung des Stegs 15 mit dem Arbeitsorgan 6.

## Patentansprüche

1. Elektromagnetische Antriebsvorrichtung zum Antrieb eines Arbeitsorganes (6), mit einem Stator (2) und einer mit dem Stator (2) berührungsfrei zusammenwirkenden Spule (3), wobei der Stator (2) einen senkrechten Steg (7) und drei im Abstand zueinander angeordnete, horizontal verlaufende Stege (8, 9, 10) aufweist, **dadurch gekennzeichnet, dass** der mittlere Steg (9) des Stators (2) einen gegen das Arbeitsorgan (6) hin offenen Spalt (14) oder einen Schlitz (19) aufweist.
